# EUROPÄISCHE PATENTANMELDUNG

(11) **EP 1 634 646 A1**
(43) Veröffentlichungstag der Anmeldung: **15.03.2006**
(21) Anmeldenummer: 05019928.0
(22) Anmeldetag: 13.09.2005
(51) Int. Cl.: B01J 37/00, B01J 37/02, B01D 53/88, B01D 53/94, C04B 38/06, C04B 38/04, B01D 39/20

(54) **Herstellungsverfahren für ein Abgasreinigungsmittel und Abgasreinigungsmittel**

(30) Priorität: 13.09.2004 DE 102004044177; 21.10.2004 DE 102004051376
(71) Anmelder: Mangold, Matthias, 82438 Eschenlohe (DE); Mangold, Christian, 82438 Eschenlohe (DE); Mangold, Hubert, 82438 Eschenlohe (DE)
(72) Erfinder: Mangold ,Mathias, 82438 Eschenlohe (DE); Mangold ,Christian, 82438 Eschenlohe (DE); Mangold,Hubert, 82438 Eschenlohe (DE)
(74) Vertreter: Lang, Friedrich

(57) **Zusammenfassung**

Die Erfindung betrifft ein Herstellungsverfahren für ein Abgasreinigungsmittel bei dem eine Oberflächenvergrößerungsschicht aus einem Washcoat oder einem Metallschaum auf einen Träger aufgebracht wird, wobei in die Oberflächenvergrößerungsschicht Grobpartikel eingebracht werden oder die Oberflächenvergrößerungsschicht aus einem Metallschaum besteht. Zudem wird auch ein entsprechend hergestelltes Abgasreinigungsmittel beschrieben.

## Beschreibung

Die Erfindung betrifft ein Herstellungsverfahren für ein Abgasreinigungsmittel gemäß den Oberbegriffen der Ansprüche 1 und 2 und ein Abgasreinigungsmittel gemäß dem Oberbegriff des Anspruchs 22.

Abgasreinigungsmittel werden in Reinigungsanlagen für Verbrennungsabgase zum Beispiel in der Kraftfahrzeugtechnik verwendet. Man kann hierbei zwischen katalytischen Abgasreinigungsanlagen und Partikel abscheidenden Abgasreinigungsanlagen unterscheiden, wobei in beiden Anlagentypen Abgasreinigungsmittel im Abgasstrom angeordnet sind. Bei den katalytisch wirkenden Abgasreinigungsanlagen werden bestimmte chemische Reaktionsabläufe durch die Abgasreinigungsmittel angeregt und/oder beschleunigt, während bei den Partikel abscheidenden Anlagen zum Beispiel Rußpartikel durch die Abgasreinigungsmittel aus dem Abgasstrom gefiltert werden.

Die bekannten Abgasreinigungsmittel weisen in der Regel einen dünnenschichtigen Träger auf, der meist aus Metall oder Keramik besteht und mit einem Partikel abscheidenden oder einem katalytischen Material beschichtet ist. Teilweise weisen auch die Partikel abscheidenden Abgasreinigungsmittel neben den filternden Eigenschaften auch katalytische Eigenschaften auf. Um möglichst viele Partikel aus dem Abgasstrom herauszufiltern und/oder um möglichst viel katalytisches Material mit dem Abgasstrom in Verbindung zu bringen, soll die mit dem Abgasstrom in Berührung kommende Oberfläche der Abgasreinigungsmittel in der Regel möglichst groß sein. Daher weisen die Träger oftmals Oberflächen vergrößernde, wabenartige oder gewellte Strukturen auf. Die gewellten Träger werden beispielsweise spiralförmig zu Rollen aufgewickelt, wodurch Strömungskanäle zwischen den Wickellagen entstehen.

Eine andere Möglichkeit zur Vergrößerung der Oberfläche von Abgasreinigungsmittel bietet das sogenannte Washcoating-Verfahren, bei dem eine, auch als Washcoat bezeichnete, Oberflächenvergrößerungsschicht auf den Träger aufgebracht wird. Dazu wird der Träger bei der Herstellung zum Beispiel in eine wässerige Pulversuspension aus einem Gemisch aus Aluminiumoxid, Siliziumoxid oder weiteren Metalloxiden getaucht wird, deren Rückstände nach dem Trocknen die Oberflächenvergrößerungsschicht bilden.

Ferner wurde bereits vorgeschlagen in Abgareinigungsanlagen Teile aus einem Metallschaum auszuführen. Bei den üblicherweise verwandten Metallschäumen handelt es sich um offenporige Schäume aus einem einzelnen Metall oder aus einer Kombination beziehungsweise Legierung verschiedener Metalle. Der Metallschaum kann zum Beispiel in einem pulvermetallurgischen Verfahren hergestellt werden. Dabei wird eine Schlämme aus einem Metallpulver oder einem Metalllegierungspulver, einem Dispergiermittel und einem Bindemittel in eine Form gegeben. Danach wird die Schlämme in der Form entwässert und schließlich bis zur Endfestigkeit gesintert.

Aufgrund der immer weiter steigenden Anforderungen an die Reinigungswirkung der bekannten Abgasreinigungsanlagen besteht ein Bedarf an darin verwendbaren Abgasreinigungsmittel die eine weiter verbesserte Reinigungswirkung aufweisen.

Der Erfindung liegt daher die **Aufgabe** zugrunde, den Wirkungsgrad solcher Abgasreinigungsmittel zu verbessern.

Die Lösung dieser Aufgabe gelingt mit einem Herstellungsverfahren für ein Abgasreinigungsmittel gemäß Anspruch 1 oder Anspruch 2 und mit einem Abgasreinigungsmittel gemäß Anspruch 22. Bevorzugte Weiterbildungen des Herstellungsverfahrens und des Abgasreinigungsmittels sind den Unteransprüchen zu entnehmen.

Nachfolgend wird die Erfindung anhand einer Zeichnung weiter erläutert. Darin zeigen schematisch:
- Fig. 1: einen Schnitt durch eine Abgasreinigungsanlage mit einem Abgasreinigungsmittel;
- Fig. 2: einen vergrößerten Schnitt durch ein erstes Ausführungsbeispiel eines erfindungsgemäß hergestellten Abgasreinigungsmittels;
- Fig. 3: einen vergrößerten Schnitt durch ein zweites Ausführungsbeispiel eines erfindungsgemäß hergestellten Abgasreinigungsmittels; und
- Fig. 4: einen vergrößerten Schnitt durch ein drittes Ausführungsbeispiel eines erfindungsgemäß herge stellten Abgasreinigungsmittels.

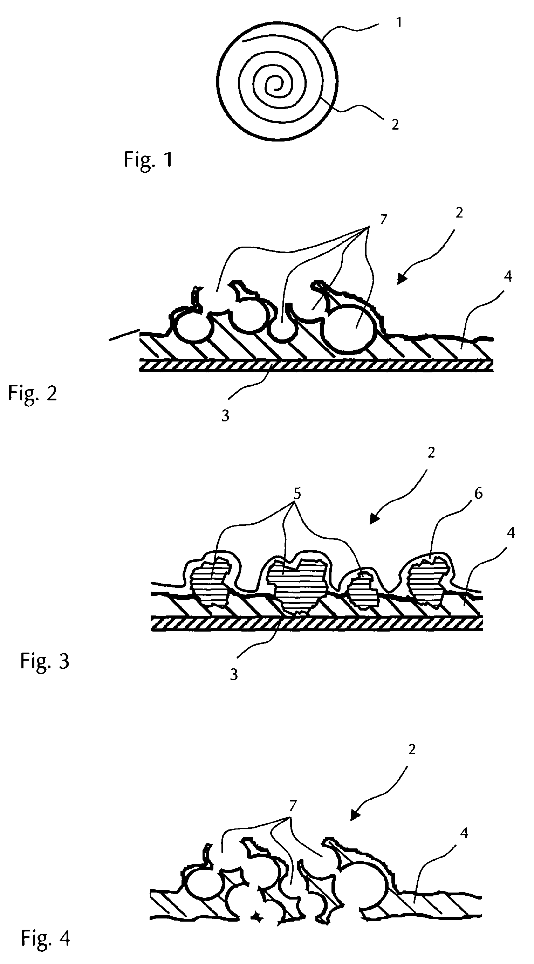

Fig. 1 zeigt eine Abgasreinigungsanlage mit einem als Rohr 1 ausgebildeten Gehäuse und einem darin angeordneten Abgasreinigungsmittel 2. Das Abgasreinigungsmittel 2 ist in dem hier gezeigten Ausführungsbeispiel ein schneckenförmig aufgewickeltes Metallblech mit katalytischer Beschichtung.

Fig. 2 zeigt nun ein erstes Ausführungsbeispiel eines erfindungsgemäß hergestellten Abgasreinigungsmittels 2, das eine 50 *µ*m dicke Metallfolie als Träger 3 aufweist. Vorteilhaft kann der Träger 3 aber auch aus Keramik oder Metall ausgeführt werden.

Der Träger 3 ist mit einer Oberflächenvergrößerungsschicht 4 mit einer Dicke von 1 *µ*m bis 200 *µ*m beschichtet. In der Ausführungsform der Fig. 2 ist die Oberflächenvergrößerungsschicht 4 ein Washcoat. Hierbei handelt es sich um einen Überzug des Trägers 3 aus einem Aluminiumoxid, Siliziumoxid, Ceroxid, Zirkonoxid, Vanadiumoxid oder anderen keramischen oder metallischen Überzügen. Der Washcoat 4 erzeugt nun erfindungsgemäß Unebenheiten bis zu 2 mm Höhe, wodurch eine Oberflächenstruktur auf dem Träger 3 mit Erhebungen und Senken entsteht, die einem Gebirge ähnlich ist und daher beim Abgasreinigungsmittel 2 filternde Eigenschaften erzeugt. Zudem verbessert die größere Oberflächenrauhigkeit die Schalldämpfung der Abgasreinigungsanlage.

Im vorliegenden Fall ist diese gebirgsähnliche Struktur dadurch erreicht worden, dass man in den Washcoat 4 Grobpartikel 5 beigemengt hat und diese nach dem Aushärten des Washcoats 4 entfernt hat. Daher sind anders als in Fig. 3 die Grobpartikel 5 in der Fig. 2 nicht mehr zu sehen, sondern nur noch die zurückgebliebenen Hohlräume 7. Im Gegensatz zum in Fig. 3 dargestellten Ausführungsbeispiel entsteht so unter Beibehaltung der Strömungskanäle eine poröse, gitterartige Überzugsstruktur der Oberflächenvergrößerungsschicht 4.

Bei den Grobpartikeln 5 handelt es sich um gegenüber den Bestandteilen der Washcoating-Emulsion deutlich größere Teilchen, die eine Dicke von 5 *µ*m bis zu 1 mm, vorzugsweise 30 *µ*m bis 500 *µ*m, aufweisen. Die Grobpartikel 5 sind bevorzugt organischer, bzw. anorganischer Natur und bestehen z.B. aus Keramiken, Sägemehl, Wachsen, Kunststoffen, Kohlenstoff oder Kohlenstoffverbindungen oder Salzen. Grobpartikel aus solchen Materialien lassen sich zum Beispiel mit Hilfe von Gasen, flüchtigen Lösungsmitteln und anderen chemischen Reagenzien leicht entfernen, wobei Hohlräume erzeugt werden. Mittels Phosphorsäure lassen sich ebenfalls Hohlräume erzeugen, indem sie mit Metallpulver unter Wärmezufuhr reagiert. Auch weist eine derartig geschaffene Oberflächenvergrößerungsschicht 4 weniger Strukturgewicht auf, so dass sie sich durch das Abgas schneller erwärmt, und dadurch die katalytische Abgasreinigung schneller nach dem Anlassen des Motors beginnt.

Das Entfernen der Grobpartikel 5 erfolgt dabei chemisch, thermisch, oder auch mechanisch zum Beispiel durch Aufbringen von Druck oder Druckluft, wobei auch Auswaschtechniken zweckmäßig sind. Im vorliegenden Ausführungsbeispiel sind die Grobpartikel 5 durch ein thermisches Ausschmelzverfahren aus der Oberflächenvergrößerungsschicht 4 entfernt worden, wodurch ein flockiger Überzug entstanden ist.

Die so gebildeten Poren 7 entsprechen in ihrer Formgebung im Wesentlichen der Form der Grobpartikel 5. Insofern kann man anhand der Poren 7 erkennen, dass es sich um rundliche Grobpartikel 5 gehandelt hat, die eine besonders gleichmäßige, gitterartige, poröse Struktur in der Oberflächenvergrößerungsschicht 4 gebildet haben.

Bei dem in Fig. 2 gezeigten Ausführungsbeispiel sind die katalytischen Edelmetalle, wie Platin, Rhodium, Paladium und ähnliche, bereits in der Oberflächenvergrößerungsschicht 4 enthalten. Beim in Fig. 3 gezeigten zweiten Ausführungsbeispiel sind sie in einer eigenen katalytischen Schicht 6 enthalten, die auf die Oberflächenvergrößerungsschicht 4 und die daraus hervorstehenden Grobpartikel 5 aufgebracht wurde. In einer weiteren hier nicht dargestellten Ausführungsform enthalten die Grobpartikel bereits die Edelmetalle.

Wie man der Fig. 3 entnehmen kann, wird beim zweiten Ausführungsbeispiel eine aufgeraute Oberflächenstruktur dadurch gebildet, dass die Grobpartikel 5 gerade in der Oberflächenvergrößerungsschicht 4 belassen werden und ca. bis zu 1 mm aus der Oberfläche hervor stehen. Bei den hier verwendeten Grobpartikeln 5 handelt es sich um solche mit einer möglichst gezackten, rauen und eine große Oberfläche aufweisenden Form. Diese halten besonders gut in der Oberflächenvergrößerungsschicht 4 und erzeugen vorteilhafterweise besonders raue Oberflächenstrukturen in der Oberflächenvergrößerungsschicht 4. Auch kann es sich bei eingebrachten Grobpartikeln 5 um sphärische oder faserige Teilchen aus organischen und/oder anorganischen Materialien handeln.

Durch Einstellen der Partikelgröße und der Partikelverteilung wird die Rauhigkeit bzw. Porosität der Oberflächenvergrößerungsschicht 4 gezielt erzeugt. Damit wird dann auch die Verteilung der gegenebenfalls in der Oberflächenvergrößerungsschicht 4 enthaltenen katalytischen Edelmetalle beeinflusst, da die Grobpartikel 5 Teile der Oberflächenvergrößerungsschicht 4 verdrängen. So kann man graduierte katalytische Beschichtungen erzeugen, die in ihren Eigenschaften an die spezifischen Anforderungen jedes einzelnen Anwendungsfalles angepasst werden können. Zum Beispiel kann es vorteilhaft sein, dass die Rauhigkeit der Oberflächenvergrößerungsschicht 4 in oder gegen Hauptströmungsrichtung des vorbeiströmenden Abgases in ansteigender Höhe und/oder Dichte ausgeführt ist.

Die Oberflächenvergrößerungsschicht 4 ist in den hier gezeigten Ausführungsbeispielen zwar einlagig ausgeführt, kann aber auch mehrlagig also zum Beispiel durch mehrfaches Tauchen erstellt werden. So ist es zum Beispiel vorteilhaft, wenn man zuvor eine Grundbeschichtung aus dem Oberflächenvergrößerungsmaterial ohne Grobpartikel 5 wählt und anschließend mindestens einen Beschichtungsvorgang mit Grobpartikeln 5 durchführt, da dann die Oberflächenvergrößerungsschicht 4 besonders gut am Träger 3 haftet.

Die Oberflächenvergrößerungsschichten 4 mit Grobpartikeln 5 können dabei vor, während bzw. nach dem Herstellen des Trägers 3 aufgebracht werden.

Besonders vorteilhaft an dieser rauen beziehungsweise porösen Oberflächenvergrößerungsschicht 4 ist, dass sie auf allen bekannten keramischen Trägern 3 oder metallisch geprägten, glatten, geschnittenen und gelochten Folien, Drähten oder Fliesen beziehungsweise Fasern aufgebracht werden kann. Durch ihre Rauhigkeit und Porosität erleichtert sie die Bildung von Turbulenzen und vergrößert so die Durchmischungswirkung zum Beispiel bei SCR-Katalysatoren im Abgasstrom. Zudem wird die Speicherfähigkeit und die Neigung zur Rußablagerung vergrößert.

In Fig. 4 ist eine dritte Ausführungsform des Abgasreinigungsmittels 2 dargestellt, bei der die Oberflächenvergrößerungsschicht 4 aus einem offenporigen Metallschaum besteht. Im hier gezeigten fertigen Zustand des Abgasreinigungsmittels 2 besteht diese letztlich nur aus einer Oberflächenvergrößerungsschicht 4, die aufgrund ihrer räumlichen Struktur selbsttragend ist. Die Herstellung eines solchen im Endprodukt nur noch aus einem Metallschaum bestehenden Abgasreinigungsmittels 2 geschieht zum Beispiel wie folgt:

Zunächst wird der Träger 3, bei dem es sich hier um eine Folie handelt, in die gewünschte Form gewickelt oder geschichtet. Dann wird der Metallschaum der Oberflächenvergrößerungsschicht 4 erzeugt, indem Metallstaub, feinste Metallteilchen oder Metallkügelchen mit einem Dispergiermittel, wie etwa Phosphorsäure, vermischt werden. Dieser Brei wird dann auf den Träger 3 aufgebracht. Vorher können dem Metallschaum zusätzlich Grobpartikel 5 beigemengt werden. Im Anschluss daran wird die Oberflächenvergrößerungsschicht 4 bis etwa 300° C ausgehärtet und getrocknet. Dabei bilden sich die beschriebenen Hohlräume. Nach Aushärtung des Metallschaums werden sowohl der Träger 3 als auch die Grobpartikel 5 chemisch, mechanisch oder thermisch entfernt, so dass sich an Stelle des Trägers Strömungskanäle mit stark aufgerauten und porösen Wänden bilden. Entsprechend sind sowohl der Träger 3 als auch die Grobpartikel 5 in Fig. 4 nicht mehr zu erkennen. Schließlich wird der Metallschaum versintert.

Das Auftragen der Oberflächenvergrößerungsschicht 4 auf einen spiralförmig aufgewickelten oder auch geschichteten Träger 3 erfolgt dann zum Beispiel durch Eintauchen des Trägers 3 in die bereits in eine Form eingegossene flüssige Metallteilchendispersion, die dann in der Form durch Zuführens von Phosphorsäure aufgeschäumt, ausgehärtet und gesintert wird, wie oben beschrieben. Die Strömungskanäle zwischen den Metallschaumlagen entstehen dann erst durch das Entfernen des Trägers 3.

Alternativ kann der Metallschaum auch vor dem Wickeln oder Schichten des Trägers 3 auf den Träger 3 aufgebracht werden. Dann wird die Oberflächenvergrößerungsschicht 4 zusammen mit dem Träger 3 gewickelt oder geschichtet.

Zudem ist auch eine Ausführungsform bevorzugt, bei der die Poren des Metallschaums die Funktion der Grobpartikel 5 übernehmen. In diesem Fall wird auf die Beimengung von Grobpartikel 5 in den Metallschaum verzichtet. Dazu wird nur ein Metallschaum als Oberflächenvergrößerungsschicht 4 auf den Träger 3 aufgebracht. Nach Entfernung des Trägers 3 weist das fertig hergestellte Abgasreinigungsmittel 2 dann nur eine selbsttragende poröse Oberflächenvergrößerungsschicht 4 aus Metallschaum auf.

Die Ausführungsform mit einer entfernbaren Folie als Träger 3 hat den Vorteil, dass durch die Formgebung der Folie wechselseitig in Strömungsrichtung unterschiedlich verjüngende Kanalquerschnitte herstellbar sind. Dabei sind die Kanalquerschnitte so verjüngend ausgeführt, dass mindestens ein Teil des Abgases durch die Wand hindurch kann. Auch sind Strömungskanäle mit Leitflächen, wie etwa Schaufeln und andere Sonderstrukturen, herstellbar, wobei diese Prägungen sich auch in Strömungsrichtung wiederholen können. Es entstehen also durch dieses Verfahren vorgegebene Strömungskanäle, die eine hochporöse Wand aufweisen, radial und axial durchströmbar sind, eine hohe Oberfläche aufweisen und dadurch eine große Rußspeicherfähigkeit besitzen.

Eine besonders vorteilhafte Ausführungsform des erfindungsgemäßen Herstellungsverfahrens erzeugt eine räumlich vernetzte Gitterstruktur der Oberflächenvergrößerungsschicht 4. Dazu wird der Träger 3 mehrschichtig, aus aufeinander gestapelten und mehrfach geschlitzten oder gestanzten Folien, z. B. Papier- oder Kartonplatten, als flächigen, niederschmelzenden Trägerelementen, ausgebildet. Diese Platten werden so gestapelt oder gewickelt, dass die Schlitze der gestapelten oder gewickelten Platten winkelversetzt, zum Beispiel rechtwinklig, zu einander verlaufen. In der Draufsicht auf einen aus gestapelten Schlitzplatten erzeugten Träger 3 erscheint dann ein Schachbrettartiges Muster aus höhenversetzten Rechtecken. Nach Aushärtung des Metallschaums wird der Träger 3, also die Schlitzplatten, etwa durch Verbrennen entfernt. Das Abgasreinigungsmittel 2 weist dann eine räumlich geflochtene selbsttragende Struktur auf. Bei Ausführung der Schlitzplatten aus einem flexiblen Material, wie etwa Papier oder dünner Pappe, kann der Träger 3 auch nach Stapelung der Schlitzplatten aber vor dem Aufbringen des Metallschaums bereits in seine Endform gewickelt werden.

Alternativ kann der Träger 3 auch nur aus einer einzigen Schlitzplatte erstellt werden. Dann werden nebeneinanderliegende, durch einen Schlitz getrennte, brückenartige Streifen der Platte wechselweise nach oben und nach unten aus der Plattenebene ausgebeult. So ergibt sich in der Seitenansicht ein fischbauchartiger Träger 3 aus nebeneinaderliegenden halbelliptischen Streifen.

Vorzugsweise werden für die in Fig. 2 und Fig. 3 dargestellten Ausführungsbeispiele eines Abgasreinigungsmittels 2 gasdichte Träger 3 wie zum Beispiel Folien aus Metall oder weiteren geeigneten Materialien verwendet. Ein Durchströmen des Trägers quer zur Hauptströmungsrichtung des Abgasstromes erfolgt nicht. Darüber hinaus kann die Oberflächenvergrößerungsschicht 4 für sich gasdicht auf den Träger 3 aufgebracht werden, wobei der Träger in diesem Fall entweder undurchlässig oder aber auch durchlässig für Gase sein kann. Das zu reinigende Abgas strömt nunmehr ausschließlich entlang der aufgerauten Oberfläche der Oberflächenvergrößerungsschicht 4, aber nicht durch die Oberflächenvergrößerungsschicht 4 hindurch. Der gleiche Effekt kann alternativ mit Hilfe einer gasdichten und selbsttragenden Oberflächenvergrößerungsschicht 4 erreicht werden, die keine spezielle Trägerschicht mehr neben der Oberflächenvergrößerungsschicht 4 aufweist. Die beiden letzten besonders bevorzugten Ausführungsformen des Abgasreinigungsmittels 2 eignen sich insbesondere für den Einsatz in Partikelabscheidern von Abgasreinigungssystemen.

Die Verwendung einer der beschriebenen Oberflächenvergrößerungsschichten 4 in einem Abgasreinigungssystem eines Kraftfahrzeugs führt ferner zu einer erheblichen Schallreduktion.

## Patentansprüche

1. Herstellungsverfahren für ein Abgasreinigungsmittel (2) bei dem auf einen Träger (3) eine Oberflächenvergrößerungsschicht (4) aufgebracht wird,
**dadurch gekennzeichnet,**
**dass** in die Oberflächenvergößerungsschicht (4) Grobpartikel (5) eingebracht werden.

2. Herstellungsverfahren für ein Abgasreinigungsmittel (2) bei dem auf einen Träger (3) eine Oberflächenvergrößerungsschicht (4) aufgebracht wird,
**dadurch gekennzeichnet,**
**dass** die Oberflächenvergößerungsschicht (4) aus einem Metallschaum hergestellt wird.

3. Herstellungsverfahren nach Anspruch 1,
**dadurch gekennzeichnet,**
**dass** ein Washcoat als Oberflächenvergrößerungsschicht (4) auf den Träger (3) aufgebracht wird.

4. Herstellungsverfahren nach Anspruch 1,
**dadurch gekennzeichnet,**
**dass** ein Metallschaum als Oberflächenvergrößerungsschicht (4) auf den Träger (3) aufgebracht wird.

5. Herstellungsverfahren nach einem der vorhergehenden Ansprüche,
**dadurch gekennzeichnet,**
**dass** in einem ersten Schritt die Grobpartikel (5) auf den Träger (3) aufgetragen werden und in einem zweiten Schritt die Oberflächenvergrößerungsschicht (4) auf den mit Grobpartikeln (5) beaufschlagten Träger (3) aufgetragen wird.

6. Herstellungsverfahren nach einem der Ansprüche 1 bis 4,
**dadurch gekennzeichnet,**
**dass** dem Material der Oberflächenvergrößerungsschicht (4) bereits vor dessen Auftragung Grobpartikel (5) beigemengt werden und zusammen mit dem Material der Oberflächenvergößerungsschicht (4) auf den Träger (3) aufgetragen werden.

7. Herstellungsverfahren nach einem der vorhergehenden Ansprüche,
**dadurch gekennzeichnet,**
**dass** die Oberflächenvergrößerungsschicht (4) in mehreren Einzelschichten aufgetragen wird.

8. Herstellungsverfahren nach einem der vorhergehenden Ansprüche,
**dadurch gekennzeichnet,**
**dass** in wenigstens einem ersten Schritt eine Grundbeschichtung der Oberflächenvergrößerungsschicht (4) ohne Grobpartikel (5) aufgetragen wird, auf die in wenigstens einem zweiten Schritt eine mit Grobpartikeln (5) versehene Oberflächenvergrößerungsschicht (4) aufgetragen wird.

9. Herstellungsverfahren nach einem der vorhergehenden Ansprüche,
**dadurch gekennzeichnet,**
**dass** die Grobpartikel (5) nach dem Auftragen der Oberflächenvergrößerungsschicht (4) entfernt werden.

10. Herstellungsverfahren nach einem der vorhergehenden Ansprüche,
**dadurch gekennzeichnet,**
**dass** die Grobpartikel (5) chemisch entfernt werden.

11. Herstellungsverfahren nach einem der Ansprüche 1 bis 9,
**dadurch gekennzeichnet,**
**dass** die Grobpartikel (5) thermisch entfernt werden.

12. Herstellungsverfahren nach einem der Ansprüche 1 bis 9,
**dadurch gekennzeichnet,**
**dass** die Grobpartikel (5) mechanisch entfernt werden.

13. Herstellungsverfahren nach einem der Ansprüche 1 bis 8,
**dadurch gekennzeichnet,**
**dass** die Grobpartikel (5) in der Oberflächenvergrößerungsschicht (4) belassen werden.

14. Herstellungsverfahren nach einem der vorhergehenden Ansprüche,
**dadurch gekennzeichnet,**
**dass** die Oberflächenvergrößerungsschicht (4) mit einer katalytischen Schicht (6) beschichtet wird.

15. Herstellungsverfahren nach einem der vorhergehenden Ansprüche,
**dadurch gekennzeichnet,**
**dass** dem Material der Oberflächenvergrößerungsschicht (4) vor der Auftragung katalytisches Material beigemischt wird.

16. Herstellungsverfahren nach einem der vorhergehenden Ansprüche,
**dadurch gekennzeichnet,**
**dass** über das Mischungsverhältnis zwischen dem Material der Oberflächenvergrößerungsschicht (4) und den Grobpartikeln (5) die katalytischen Eigenschaften der Abgasreinigungsmittel(2) definiert werden.

17. Herstellungsverfahren nach einem der vorhergehenden Ansprüche,
**dadurch gekennzeichnet,**
**dass** der Träger (3) nach dem Aufbringen der Oberflächenvergrößerungsschicht (4) entfernt wird.

18. Herstellungsverfahren nach einem der vorhergehenden Ansprüche,
**dadurch gekennzeichnet,**
**dass** der Träger (3) vor dem Aufbringen der Oberflächenvergrößerungsschicht (3) zu einer Struktur aufgewickelt oder geschichtet wird.

19. Herstellungsverfahren nach einem der vorhergehenden Ansprüche,
**dadurch gekennzeichnet,**
**dass** durch das Entfernen des Trägers (3) Strömungskanäle im Abgasreinigungsmittel (2) erzeugt werden.

20. Herstellungsverfahren nach einem der vorhergehenden Ansprüche,
**dadurch gekennzeichnet,**
**dass** als Träger (3) wenigstens ein mehrfach geschlitztes flächiges oder gestanztes Trägerelement verwendet wird.

21. Herstellungsverfahren nach Anspruch 20,
**dadurch gekennzeichnet,**
**dass** wenigstens zwei Trägerelemente zu einem Träger (3) geschichtet oder gewickelt werden, wobei die Trägerelemente so angeordnet werden, dass die Schlitze winklig, vorzugsweise rechtwinklig, zueinander verlaufen.

22. Abgasreinigungsmittel (2) hergestellt nach einem der vorhergehenden Ansprüche,
**dadurch gekennzeichnet,**
**dass** die Oberflächenvergrößerungsschicht (4) ein keramisches und/oder metallisches Material aufweist.

23. Abgasreinigungsmittel nach Anspruch 22,
**dadurch gekennzeichnet,**
**dass** die Oberflächenvergrößerungsschicht (4) einen offenporigen Metallschaum aufweist.

24. Abgasreinigungsmittel nach einem der Ansprüche 22 oder 23,
**dadurch gekennzeichnet,**
**dass** die Oberflächenvergrößerungsschicht (4) aus einer Auswahl aus mindestens einem der Materialien Aluminiumoxid, Siliziumoxid, Ceroxid, Zirkonoxid und Vanadiumoxid besteht.

25. Abgasreinigungsmittel nach einem der vorhergehenden Ansprüche,
**dadurch gekennzeichnet,**
**dass** die Grobpartikel (5) eine Größe von 5 *µ*m bis 1 mm, vorzugsweise 30 *µ*m bis 500 *µ*m, aufweisen.

26. Abgasreinigungsmittel nach einem der vorhergehenden Ansprüche,
**dadurch gekennzeichnet,**
**dass** die Grobpartikel (5) aus einem organischen und/oder anorganischen Stoff bestehen.

27. Abgasreinigungsmittel nach einem der vorhergehenden Ansprüche,
**dadurch gekennzeichnet,**
**dass** die Schichtdicke der Oberflächenvergrößerungsschicht (4) 1 *µ*m bis 200 *µ*m beträgt.

28. Abgasreinigungsmittel nach einem der vorhergehenden Ansprüche,
**dadurch gekennzeichnet,**
**dass** die Partikelgröße oder die Partikeldichte der Grobpartikel (5) in einer Richtung der Oberflächenvergrößerungsschicht (4) zunimmt.

29. Abgasreinigungsmittel nach einem der vorhergehenden Ansprüche,
**dadurch gekennzeichnet,**
**dass** die Oberflächenvergrößerungsschicht (4) eine selbsttragende Struktur hat.

30. Abgasreinigungsmittel nach einem der vorhergehenden Ansprüche,
**dadurch gekennzeichnet,**
**dass** der Träger (3) aus einem chemisch, thermisch und/oder mechanisch von der Oberflächenvergrößerungsschicht 4 entfernbaren Material, vorzugsweise einem Papier, besteht.
